Europäisches Patentamt

European Patent Office

Office européen des brevets

(19)

(11) Publication number : **0 375 245 B1**

(12) **EUROPEAN PATENT SPECIFICATION**

(45) Date of publication of patent specification :
03.03.93 Bulletin 93/09

(51) Int. Cl.⁵ : **C01G 21/10, C01G 21/02**

(21) Application number : **89312945.2**

(22) Date of filing : **12.12.89**

(54) **Method and apparatus for making highly oxidized lead powder.**

(30) Priority : **12.12.88 JP 314633/88**

(43) Date of publication of application :
**27.06.90 Bulletin 90/26**

(45) Publication of the grant of the patent :
**03.03.93 Bulletin 93/09**

(84) Designated Contracting States :
**DE FR GB IT**

(56) References cited :
**GB-A- 1 400 885**
**US-A- 1 992 395**
**US-A- 2 347 131**

(73) Proprietor : **MATSUSHITA ELECTRIC INDUSTRIAL CO., LTD.**
**1006, Kadoma**
**Kadoma-shi, Osaka-fu 571 (JP)**

(72) Inventor : **Yasuda, Hiroshi**
**158-4, Aza-Yaroku Imure-cho**
**Toyohashi-shi Aichi-ken (JP)**
Inventor : **Yonezu, Kazuyoshi**
**514-12, Aza Kitayama Ooiwa-cho**
**Toyohashi-shi Aichi-ken (JP)**
Inventor : **Takahashi, Katsuhiro**
**38-1 Hashiraichiban-cho**
**Toyohashi-shi Aichi-ken (JP)**
Inventor : **Yamamoto, Kenzo**
**106-14, Aza-Nagayama Higashimiyuki-cho**
**Toyohashi-shi Aichi-ken (JP)**

(74) Representative : **Spencer, Graham Easdale et al**
**A.A. Thornton & CO Northumberland House**
**303-306, High Holborn**
**London WC1V 7LE (GB)**

## Description

The present invention is concerned with a method and apparatus for making a highly oxidized lead powder containing red lead ($Pb_3O_4$) for use in a lead-acid storage battery.

It is known that the addition of red lead ($Pb_3O_4$) to lead oxide active material increases the efficiency of the formation charging of the electrode plates of a lead-acid battery. Such red lead is conventionally made by heating lead powder starting material which has been made in a ball-mill or by the Barton pot method, in an atmosphere of oxygen or air at a temperature of about 400 to 450°C. The lead powder starting material used for this purpose preferably contains 60% to 85% by weight of lead monoxide (PbO), also known as litharge; (the litharge content is referred to hereinafter as LC).

It should be noted that when lead powder starting material having such an LC is directly supplied to a high temperature heating furnace, such as a kiln, its temperature sharply increases due to the liberation of heat resulting from rapid oxidation. When the temperature rises to about 600°C, lead monoxide of a yellow color, which is called yellow lead, is produced. Once yellow lead has been formed, the production of red lead is slowed down even if the temperature of the lead powder starting material is reduced to near 450°C.

US-A-2,347,131 describes a process for converting Barton litharge, which comprises a mixture of yellow litharge and red litharge together with some metallic lead, to substantially pure red litharge, which process comprises heating the Barton litharge in the loose condition in an oxidizing atmosphere to a temperature between 38°C (100°F) and 100°C (212°F) and simultaneously supplying water thereto in a quantity of up to 7% based on the total weight of the litharge, the heating stage being carried out for a time sufficient to convert substantially all of the yellow litharge to red litharge.

Red litharge is, of course, another form of lead monoxide (PbO) and the process of this U.S. patent does not yield red lead ($Pb_3O_4$).

US-A-1,992,395 describes a process for making red lead from a finely divided powder material composed mainly of a lead oxide lower than red lead and to a lesser extent of metallic lead, which comprises passing the material through a single continuous heated rotating retort while passing an oxidizing medium through the retort and maintaining the temperature at the outlet end of the retort and for a distance towards the inlet end at a relatively high temperature suitable for the formation of red lead and at the same time maintaining adjacent the inlet end of the retort, a lower temperature suitable for the conversion of the metallic lead present in the material to litharge without fusion of the lead.

We believe that in this process the metallic lead will be converted to yellow lead and the latter, as already noted, can only be converted slowly to red lead.

The present invention is based on the discovery following experimental work extending over a long period that highly oxidized lead powder containing a small portion of lead monoxide or lead hydroxide binds better to other active components of the electrode plate of a lead-acid battery than a powder which consists almost entirely of red lead, and the further development of an economical and satisfactory process for producing such a highly oxidized lead powder.

According to the present invention there is provided a method of making a highly oxidized lead powder containing red lead ($Pb_3O_4$), which comprises:

(a) subjecting a lead powder starting material containing metallic lead and litharge (PbO) to maturing oxidation to increase the litharge content thereof, thereby obtaining a spontaneous rise in temperature of the material and controlling said temperature rise to not more than 100°C by adding cooling water to the material, and

(b) then heating the matured material from step (a) to a temperature above that of step (a) to obtain a red lead content of from 55 to 95 wt. percent,

steps (a) and (b) being successively carried out within the same rotary kiln furnace.

The present invention also provides apparatus for making a highly oxidized lead powder containing red lead ($Pb_3O_4$), which comprises a tilted rotary kiln furnace having a low temperature section occupying the upper part of the furnace and a high temperature section occupying the lower part of the furnace, the low temperature section having an inlet for lead powder starting material and a water supply device.

In the maturing oxidation process, the amount of water added to the lead powder starting material is preferably from 4 to 10 weight percent of the amount of the lead powder. The lead powder starting material used preferably has a LC of more than 60% weight percent and, more preferably, has a LC of 80% to 90% weight percent. The maturing oxidation process is preferably carried out for from 15 to 120 minutes. The time required for this step of the process is dependent on the temperature of the water. For maximum efficiency, the water temperature is between 60°C and the boiling point and the maturing oxidation is carried out for a period of 30 to 80 minutes.

In the apparatus according to the invention it is preferred that the water supply device should terminate in a spray head adapted to spray water radially in the low temperature section in the furnace. This arrangement enables the water to be applied uniformly to the lead powder material.

In the method of the present invention, the maturing oxidation step and the heating step are successively carried out in the same reaction furnace, the lead powder starting material being heated by the liberation of heat from its oxidation within a short period of time during the maturing oxidation step, but an abrupt temperature increase being avoided and controlled by the latent heat of the added water. The formation of yellow lead is thus controlled and the content of litharge increased. The transfer to the heating step can accordingly be carried out continuously without interruption of the heating procedure.

The lead powder rich has undergone the maturing oxidation is transferred to the heating step in the same furnace without reduction in its temperature, thus ensuring no loss of heat. Also, the temperature is kept stable at the initial stage of the heating step. Accordingly, the conditions for producing red lead remain unchanged and the heating step is easier to control and to obtain the optimum holding time of the lead powder in the furnace. As a result highly oxidised lead powder can be produced having the desired litharge and red lead contents and with a high degree of uniformity.

For the better understanding of the invention, a preferred embodiment of apparatus for making highly oxidized lead powder will now be described, by way of example, with reference to the accompanying drawing, in which:

Fig. 1 is a diagrammatic axial section of an apparatus for making highly oxidized lead powder, and

Fig. 2 is a diagram showing the relationship between the red lead content and the holding time of lead powder material in a furnace according to the method of the present invention and according to the prior art.

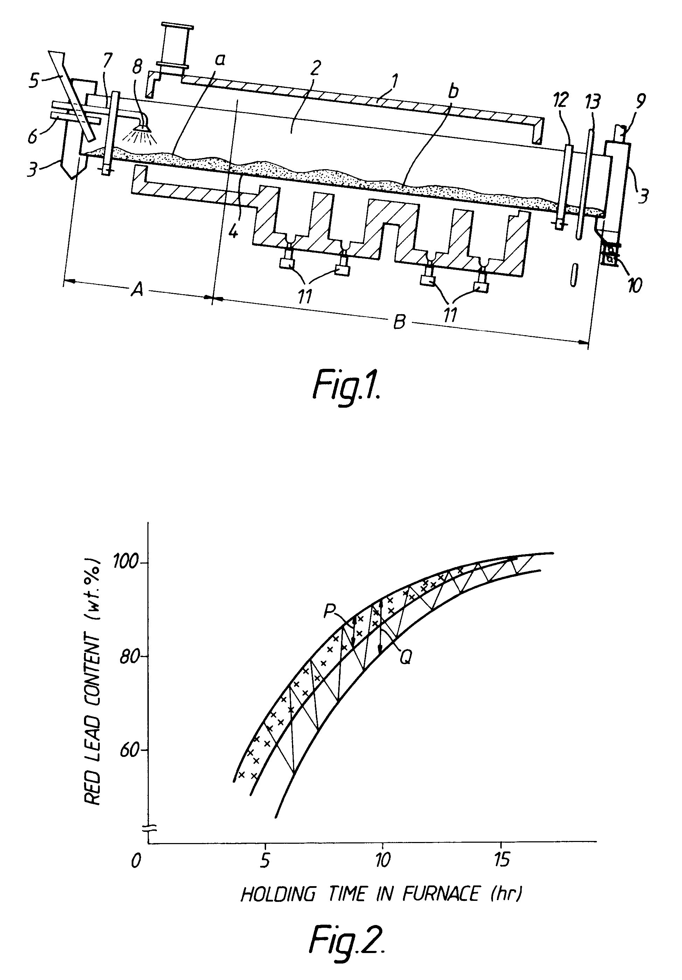

The apparatus shown in Fig. 1 comprises a rotary cylindrical kiln 1 having a furnace body 4 formed by closing a cylinder 2 at both its ends with end plates 3, 3 and arranged at an angle of 0.1 to 1 degrees to the horizontal so as to be raised at the material supply inlet end thereof. The furnace body 4 is supported by supports 12 for rotation by a drive gear 13 of a motor (not shown). The apparatus further comprises a lead powder supply inlet 5 of tubular shape, an air intake 6, and a water supply conduit 7 which terminates in a spray head 8, all of which extend inwardly through the end plate 3 at the inlet end of the furnace body 4. The other end plate 3 at the outlet end of the furnace body is provided with an air exhaust outlet 9 and a discharge outlet 10 for highly oxidized lead powder. The air intake 6 and the exhaust outlet 9 are provided with means for controlling the amount of air supplied to the furnace in order to restrict the formation of yellow lead in the maturing oxidation step.

The furnace body 4 of the kiln 1 comprises a low temperature section A and a high temperature section B, the former being at the inlet end of the furnace and the latter at the outlet end. The apparatus further comprises heating means 11, for example gas burners, disposed below the high temperature section B of the furnace 4.

The water supply conduit 7 extends into the low temperature section A of the furnace and terminates in a spray head 8 adapted to spray water radially on to the lead powder material.

In operation, lead powder starting material a which preferably has a litharge content of at least 60 weight percent and, more preferably, 80 to 90 weight percent, is introduced through the inlet 5 into the low temperature section A of the furnace, a controlled amount of water is sprayed on to it from the spray head 8, and maturing oxidation of the powder a takes place while it moves through the low temperature section A.

Table 1 shows how the litharge content of a lead powder material having an initial LC of 80%, varies in relation to the amount of water applied and the time taken for the maturing oxidation step. The latter can be controlled by changing the transfer speed of the lead powder by changing the speed of rotation of the furnace.

## Table 1 LC(%) after maturing oxidation

| Amount of applied water (wt %) | Time of maturing oxidation (minutes) (maturing temperature: about 80°C) | | | | | | | |
|---|---|---|---|---|---|---|---|---|
| | min. 5 | 10 | 15 | 20 | 60 | 90 | 120 | 180 |
| 2 wt% | 80% | 81 | 81 | 82 | ·82 | 82 | 83 | 83 |
| 4 | 81 | 82 | 83 | 84 | 86 | 88 | 90 | 92 |
| 6 | 81 | 82 | 84 | 86 | 88 | 89 | 92 | 93 |
| 8 | 81 | 83 | 85 | 87 | 88 | 90 | 93 | 93 |
| 10 | 81 | 83 | 85 | 87 | 88 | 91 | 93 | 93 |
| 12 | Powder turns to a paste | | | | | | | |

The supply of water to the lead powder material a can be freely adjusted and is preferably more than 4 weight percent and, more preferably, is from 6 - 8 weight percent, based on the weight of the lead powder material. If the supply of water is less than 4 weight percent, the result of the maturing oxidation becomes unfavourable and if it is over 10 weight percent, the lead powder material a turns to a paste and solidifies. With over 10 wt. % addition of water, portions of the powder become adhesively attached to the inner wall of the kiln surface so that the course of the oxidation cannot be effectively controlled.

As the powder a moves through the low temperature section A, its litharge content is increased. It is preferred that the holding time of the powder a at below 100°C in the maturing oxidation step should be more than 15 minutes in order to ensure an increase of 5% in the LC. Though the LC increases with an increase of time, it is found that there is no significant further increase in LC after 120 minutes.

From the low temperature section A, the lead powder, now b, passes to the high temperature section B. The latter is preferably heated to a temperature of from 400 to 500°C.

As the matured oxidized lead powder b is successively transferred to the high temperature section B in the same furnace, there is no loss of heat and the temperature at the upstream end of the high temperature section B remains stable. The conditions for producing red lead can therefore be kept constant.

Fig. 2 shows the relationship between the total holding time of the powder in the furnace and the red lead content of the product. In Fig. 2, the upper band P of results were obtained using a 6 wt % water addition in accordance with the invention; these results show the red lead content of the final product increased with the holding time. The lower band Q of results were obtained with lead powder material to which water was added outside the furnace and which was subject to maturing oxidation in the atmosphere at a temperature of several tens of degrees before being loaded into the furnace. The results in band Q were subject to a high degree of inconsistency in the formation of red lead.

In the prior art process in which lead powder with no added water is supplied directly to a furnace, the abrupt rise in temperature on loading caused a considerable amount of yellow lead to be formed and the control of the formation of red lead was difficult to carry out.

## Claims

1. A method of making a highly oxidized lead powder containing red lead ($Pb_3O_4$), which comprises:

   (a) subjecting a lead powder starting material containing metallic lead and litharge (PbO) to maturing oxidation to increase the litharge content thereof, thereby obtaining a spontaneous rise in temperature of the material and controlling said temperature rise to not more than 100°C by adding cooling water

EP 0 375 245 B1

to the material, and
(b) then heating the matured material from step (a) to a temperature above that of step (a) to obtain a red lead content of from 55 to 95 wt. percent,
    steps (a) and (b) being successively carried out within the same rotary kiln furnace.

2. A method according to claim 1, in which the amount of water added in step (a) is from 4 to 10 wt. percent of the lead powder starting material.

3. A method according to claim 1 or 2, in which the litharge content of the lead powder starting material is more than 60 wt. percent.

4. A method according to claim 3, in which the litharge content is from 80 to 90 wt. percent.

5. A method according to any of claims 1 to 4, in which step (a) is carried out for a period of 15 to 120 minutes.

6. A method according to any of claims 1 to 4, in which the litharge content of the lead powder starting material is from 80 t 90 wt. percent, step (a) is carried out for a period of 15 to 120 minutes, and step (b) is carried out at a temperature of from 400 to 500°C.

7. Apparatus for making a highly oxidized lead powder containing red lead ($Pb_3O_4$), which comprises a tilted rotary kiln furnace having a low temperature section occupying the upper part of the furnace and a high temperature section occupying the lower part of the furnace, the low temperature section having an inlet for lead powder starting material and a water supply device.

8. Apparatus according to claim 7, in which the water supply device terminates in a spray head adapted to spray water radially in the low temperature section of the furnace.


**Patentansprüche**

1. Verfahren zur Herstellung von hoch oxydiertem Bleipulver, das rotes Bleioxid ($Pb_3O_4$) enthält, das umfaßt:
    (a) Reife-Oxydation (maturing oxidation) eines Bleipulver-Ausgangsmaterials, das metallisches Blei und Bleiglätte (PbO) enthält, um dessen Bleiglättegehalt zu erhöhen, wodurch eine spontane Temperaturerhöhung des Materials erreicht wird, und Begrenzung dieses Temperaturanstiegs, so daß er 100°C nicht übersteigt, indem dem Material Kühlwasser zugesetzt wird, und
    (b) anschließendes Erhitzen des in Schritt (a) gereiften (matured) Materials auf eine Temperatur, die über der von Schritt (a) liegt, um einen Gehalt an rotem Bleioxid von 55 bis 95 Masseprozent zu erreichen,
    wobei die Schritte (a) und (b) nacheinander in ein und demselben Rohrofen ausgeführt werden.

2. Verfahren nach Anspruch 1, wobei die in Schritt (a) zugegebene Wassermenge 4 bis 10 Masseprozent des Bleipulver-Ausgangsmaterials beträgt.

3. Verfahren nach Anspruch 1 oder 2, wobei der Bleiglättegehalt des Bleipulver-Ausgangsmaterials mehr als 60 Masseprozent beträgt.

4. Verfahren nach Anspruch 3, wobei der Bleiglättegehalt 80 bis 90 Masseprozent beträgt.

5. Verfahren nach einem der Ansprüche 1 bis 4, wobei Schritt (a) über 15 bis 120 Minuten ausgeführt wird.

6. Verfahren nach einem der Ansprüche 1 bis 4, wobei der Bleiglättegehalt des Bleipulver-Ausgangsmaterials 80 bis 90 Masseprozent beträgt, Schritt (a) über 15 bis 120 Minuten ausgeführt wird, und Schritt (b) bei einer Temperatur von 400 bis 500°C ausgeführt wird.

7. Vorrichtung zur Herstellung eines hochoxydierten Bleipulvers, das rotes Bleioxid ($Pb_3O_4$) enthält, welche einen geneigten Drehrohrofen mit einem Niedrigtemperaturbereich, der den oberen Teil des Ofens einnimmt, und einem Hochtemperaturbereich, der den unteren Teil des Ofens einnimmt, umfaßt, wobei der Niedrigtemperaturbereich einen Einlaß für Bleipulver-Ausgangsmaterial und eine Wasserzufuhreinrichtung hat.

5

8. Vorrichtung nach Anspruch 7, wobei die Wasserzufuhreinrichtung in einem Sprühkopf endet, der Wasser radial in den Niedrigtemperaturbereich des Ofens sprüht.

**Revendications**

1. Une méthode de fabrication d'une poudre de plomb fortement oxydée contenant du plomb rouge ($Pb_3O_4$), qui consiste :

(a) à soumettre un matériau de départ de poudre de plomb contenant du plomb métallique et de la litharge (PbO) à une oxydation de maturation pour en accroître sa teneur en litharge, obtenant ainsi une élévation spontanée de la température du matériau et à contrôler l'élévation de ladite température à une valeur ne dépassant pas 100°C par addition de l'eau de refroidissement à ce matériau, et

(b) à chauffer ensuite le matériau maturé de l'étape (a) à une température supérieure à l'étape (a) pour obtenir une teneur en plomb rouge de 55 à 95% en poids,

les étapes (a) et (b) étant conduites successivement à l'intérieur du même four rotatif.

2. Une méthode selon la revendication 1, selon laquelle la quantité d'eau ajoutée dans l'étape (a) est de 4 à 10% en poids du matériau de départ de poudre de plomb.

3. Une méthode selon la revendication 1 ou 2, selon laquelle la teneur en litharge du matériau de départ de poudre de plomb est supérieure à 60% en poids.

4. Une méthode selon la revendication 3, selon laquelle la teneur en litharge est de 80 à 90% en poids.

5. Une méthode selon l'une quelconque des revendications 1 à 4 selon laquelle l'étape (a) est conduite pendant une période de 15 à 120 min.

6. Une méthode selon l'une quelconque des revendications 1 à 4, selon laquelle la teneur en litharge du matériau de départ de poudre de plomb est de 80 à 90% en poids, l'étape (a) est conduite pendant une période de 15 à 120 min, et l'étape (b) est conduite à une température de 400 à 500°C.

7. Appareil pour fabriquer une poudre de plomb fortement oxydée contenant du plomb rouge ($Pb_3O_4$), qui comprend un four rotatif incliné ayant une section à température basse occupant la partie supérieure du four et une section à température haute occupant la partie inférieure du four, la section à température basse ayant une entrée pour le matériau de départ de poudre de plomb et un dispositif d'alimentation d'eau.

8. Appareil selon la revendication 7, selon lequel le dispositif d'alimentation d'eau se termine par une tête de pulvérisation adaptée pour pulvériser de l'eau radialement dans la section à température basse du four.

Fig.1.

Fig.2.